# EUROPEAN PATENT SPECIFICATION

(11) **EP 0 636 474 B1**
(45) Date of publication and mention of the grant of the patent: **27.10.1999**
(21) Application number: 94202198.1
(22) Date of filing: 28.07.1994
(51) Int. Cl.: B32B 31/00, B29C 44/06, B05D 7/02, C09J 131/02, B29K 23/00, B29K 75/00, B29K 105/04, B29K 105/34, B29L 9/00

(54) **A process for preparing laminates, and laminates so prepared**
Verfahren zur Herstellung von Laminaten und nach dem Verfahren hergestellten Laminate
Procédé pour fabriquer des stratifiés et stratifiés ainsi préparés

(30) Priority: 28.07.1993 EP 93202234
(43) Date of publication of application: 01.02.1995
(73) Proprietor: SHELL INTERNATIONALE RESEARCH MAATSCHAPPIJ B.V., 2596 HR Den Haag (NL)
(72) Inventor: Slinckx, Martine Madeleine Christiane Pierre, B-1348 Ottignies, Louvain-La-Neuve (BE); Jones, David Russell, B-1348 Ottignies, Louvain-La-Neuve (BE)

(56) References cited:
- EP-A- 0 018 847
- EP-A- 0 421 269
- EP-A- 0 486 110
- GB-A- 1 251 973
- DATABASE WPI Week 9310, Derwent Publications Ltd., London, GB; AN 93-080621 & JP-A-5 025 449 (KURARAY CO LTD) 2 February 1993
- DATABASE WPI Week 8242, Derwent Publications Ltd., London, GB; AN 82-89255E & JP-A-57 147 564 (KURARAY KK) 11 September 1982
- DATABASE WPI Week 9019, Derwent Publications Ltd., London, GB; AN 90-144364 & JP-A-2 091 132 (MITSUI TOATSU CHEM INC) 30 March 1990
- J. BANDRUP, E.H. IMMERGUT 'POLYMER HANDBOOK second edition' , JOHN WILEY & SONS , NEW YORK * page IV-337 - page IV-359 *

## Description

The invention relates to a process for preparing laminates of at least one layer of a polyolefin and at least one layer of a polyurethane and/or polyisocyanurate. More specifically, the invention relates to a process for preparing laminates of at least one layer of a polyolefin such as polypropylene, and at least one layer of polyurethane and/or polyisocyanurate foam. In addition, the invention relates to the laminates so prepared.

Polyolefins, particularly polypropylene, have become the most commonly used plastic material in both household and industrial applications. This is due to their outstanding performance at relatively low cost. One of the many applications of polypropylene is as base layer for laminates. These laminates, obtained by co-extrusion, combine properties from the polyolefin layer and the material attached thereto.

For instance, polypropylene could be used to replace toughened polystyrene or ABS that is customary employed as lining material in refrigerator. It was found that the original materials could be detrimentally affected by the environmentally more friendly blowing agents (HCFC's, low (cyclo)hydrocarbons) replacing the much objected CFC's. A setback of polyolefins is that, due to their inert surfaces, they cannot be bonded readily to other (polar) materials, in particular not to polyurethane and/or polyisocyanurate. Also in other areas, such as manufacture of high-tech sport shoes, the production of insulated pipes and in automotive applications, this problem of adhesion between polyolefins and polyurethane can be found.

In the art, various surface treatments such as flame oxidation, corona discharge and chemical etching have been proposed with some measure of success to improve the bonding between inert polyolefins and polar materials. Furthermore, it is known to use pressure-sensitive adhesives, such as disclosed in US-A-3,258,443 or combinations of tiecoats and adhesive topcoats such as disclosed in EP-A-0018847.

In particular, the latter document (see for instance example 11) provides polypropylene-polyurethane foam laminates with a remarkable tear strength. The process described consists of applying a tiecoat on the polypropylene and a pressure-sensitive topcoat on pre-foamed polyurethane panels and pressing both materials together. This process is inconvenient in many applications and particularly unrealisable for domestic appliances where foam has to be expanded in-situ.

Purpose of the present invention is to provide a more efficient process for preparing laminates of at least one layer of a polyolefin, in particular an untreated polypropylene, and at least one layer of polyurethane and/or polyisocyanurate. This process overcomes the drawbacks mentioned above, thereby enabling for instance the production of polyurethane foam in a precoated polypropylene mould. Accordingly, the invention provides a process for preparing laminates of at least one layer of a polyolefin and at least one layer of polyurethane and/or polyisocyanurate, comprising applying an interpolymer coating on at least one side of said layer of the polyolefin, and preparing said layer of the polyurethane and/or polyisocyanurate on top of said interpolymer coating, wherein the interpolymer coating is composed of an interpolymer prepared by bulk, solution, suspension or emulsion polymerisation of a monomer mixture that has an average solubility parameter δ of less than 8.1, preferably less than 8.05 (cal/cm³)^{½}, measured according to Small, Polymers Handbook 2nd ed., Section IV, part 15 p. IV-337 to 359).

It is particularly surprising that the process of the invention is successful in providing laminates of at least one layer of a polyolefin and at least one layer of a polyurethane and/or polyisocyanurate foam. The blowing agents commonly used for preparing a foam, such as the (outdated) CFC's, the HCFC's and the lower (cyclo) hydrocarbons (i.e., having a boiling point of less than about 80 °C, such as cyclopentane), readily dissolve the interpolymer coating applied onto the polyolefin, in particular at the reaction temperature of the polymerisation of the polyurethane and/or polyisocyanurate starting materials. Subsequent to the interpolymer being dissolved and thereby removed, a skilled person would not expect the polyurethane and/or polyisocyanurate to adhere to the polyolefin.

Even in the absence of a blowing agent or other agent that could dissolve the interpolymer, a skilled person would not expect the applied interpolymer to remain sufficiently inert during the application and subsequent polymerisation of the polyurethane and/or polyisocyanurate starting materials to provide the outstanding adhesive properties found by the inventors. Such starting materials are known to be highly reactive, and accordingly, believed to be disruptive in respect of the integrity of the interpolymer coating.

The interpolymer coating is composed of an interpolymer suitably prepared by bulk, solution, suspension and, preferred for environmental reasons, by emulsion polymerisation. It is applied on the polyolefin by application techniques known in the art. A very suitable application technique comprises applying a water-based latex (obtained by emulsion polymerisation).

The interpolymer is suitably prepared from a monomer mixture that has an average solubility parameter δ (calculated by "the group molar attraction constants", according to Small, Polymers Handbook, 2nd ed., Section IV, part 15, pages IV-337 to 359) of less than 8.1, preferably less than 8.05 cal/cm³)^{½}. An interpolymer prepared from a monomer mixture having a δ of 8.1 or slightly more, may still be used, but only in combination with a surfactant that lowers the surface tension of the interpolymer coating, and provided that the total amount of surfactant (including the amount of surfactant used in the interpolymer production step) does not substantially increase the polarity of the coating.

The monomer mixture preferably comprises:-
1) at least 60 %wt and preferably at least 80 %wt of one or more vinyl esters of tertiary, saturated carboxylic acids containing 5 to 20, preferably 5 to 13 carbon atoms in the acid moiety, the remaining less than 40 %wt, preferably less than 20 %wt being composed of at least
2) one or more alkyl ester of a polymerisable alpha, beta-unsaturated carboxylic acid containing up to 12 carbon atoms in the alkyl moiety, and/or
3) one or more vinyl esters of saturated aliphatic monocarboxylic acids containing up to 8 carbon atoms in the acid moiety, and/or
4) up to 3 %wt, preferably up to 1 %wt of one or more stabilising monomers selected from the group comprising (meth)acrylic acid, (meth)acrylamide, a C₁-C₃ hydroxyalkyl (meth)acrylate and sodium vinyl sulphonate.

When the interpolymer is prepared by emulsion polymerisation it is desirable that the latex is essentially free of environmentally undesirable co-solvents or coalescing agents. Accordingly, it is preferred that the interpolymer has a minimum film forming temperature of less than the application temperature (say below 25 °C). It is to be understood, that the skilled man will have no difficulty preparing such an interpolymer by appropriate selection of monomers and the ratios thereof.

Background information in respect of suitable monomers and process conditions may, for instance, be found in the VeoVa Technical Manuals, VM 2.3 in particular (distributed by Shell International Chemical Company, VeoVa is a registered trademark), and the numerous patents in this technical field.

The means and conditions for polymerising the aforementioned monomers is, likewise, well known by the skilled man. In the preferred embodiment, the interpolymers are obtained by emulsion polymerisation, using a water soluble peroxide or/and persulphate as initiator and suitable surfactants as stabilising agents.

Latices obtained by emulsion polymerisation comprise preferably 20 to 60% of the polymer solids and most preferably 30 to 45% of the latex polymer solids.

The adherent interpolymer in solution, in suspension and preferably in aqueous dispersion can be used "as is" or formulated with other ingredients to achieve usual application properties.

Thickeners can be added to achieve the right rheology depending on the application technique (brush, air-spray and airless spray, hot or cold). Additional stabilizing surfactant, generally added at about 0.1 to 1.0% may be desirable to achieve a higher stability of the system and/or to improve the wettability of the inert surface by the wet interpolymer film. Other additives normally used in water based coatings may be added such as anti-foaming agents, antifreeze agents, bactericide and, fungicide.

Suitably, if the interpolymer is applied as a water-based latex (prepared by emulsion polymerisation), the latex comprises a post-added amount of special surfactant (e.g. fluorinated surfactants) in order to reduce the latex surface tension to ensure a homogeneous application of the wet film on the polyolefin. A small amount - 0.1 to 1.0 %wt, preferably 0.2 to 0.5 %wt on latex - is sufficient to insure a suitable wettability of the polyolefin by the water based coating.

As indicated above, the laminates prepared by the present process are particularly useful for deep-freeze and refrigerator industry, as they have excellent tear strength well below -20 °C (operating temperature) as well as at 60 °C or more (temperature at which the laminates could exit the mould and could be subjected to tear stresses).

The polyurethane layer and/or polyisocyanurate layer is applied on the interpolymer coating by bringing the ordinary starting materials (monomers, catalyst and further additives) on top of the coating and subjecting them to polymerisation conditions.

The preparation of polyurethanes and/or polyisocyanurates is well known in the art, and is -as such- no part of the invention.

For instance, in Kirk-Othmer, "Encyclopedia of Chemical Technology", 3rd ed., Vol. 23 an entire chapter is devoted to "Urethane polymers".

Although the organic polyisocyanate used in the present invention may be any one or more of the aromatic aliphatic and/or cycloaliphatic compounds disclosed in this reference (see in particular the list on pages 586 and 587), the commodity monomers toluene diisocyanate ("TDI"), 4,4'methylenediphenyl diisocyanate ("MDI", also referred to as diphenylmethane diisocyanate), or the polymeric product of the latter ("PMDI") and blends thereof are preferred. In addition, this reference discloses an extensive listing of possible co-reactants (polyols and/or water), blowing agents, catalysts, flame retardants, extenders, and other common additives. Fillers, dyes or plasticisers of known types may also be used. These and other auxiliaries are well known to those skilled in the art, and finding the usual relative amounts of all these compounds requires no inventive effort.

In the preferred embodiment, wherein a layer of polyurethane foam is applied on top of the interpolymer coating, the foaming is carried out in the presence of water and/or additional organic blowing agents. Such organic blowing agents are preferably substantially free of halogenated hydrocarbons. The water, if used at all, is normally used in amounts of 0.5 to 15 parts by weight (hereinafter pbw), preferably 1.0 to 10 pbw, more preferably 2 to 5 pbw, based on 100 pbw polyol.

The process of the invention may preferably be employed either continuously in an open environment employing a conveyer belt, or batch-wise in a closed mould by in-situ foaming, i.e., using a slabstock or moulding process.

In the most preferred embodiment, the polyurethane starting mixture comprises:
1) a polyol composition having a hydroxyl value in the range 200 - 700 mg KOH/g,
2) one or more polyisocyanates, preferably selected from toluene diisocyanate and/or diphenylmethane diisocyanate, and
3) one or more blowing agents, preferably selected from HCFC 141B, and/or cyclopentane and, optionally water.

The preferred hydroxyl value of the polyol depends on the type of blowing agent employed, and particularly on the presence and level of water in the formulation. In this preferred embodiment, the polyol compositions may contain additives such as surfactants, normally organo-silicone, catalyst such as amine or organo-metallic compounds. Although the polyol may be dried, if water is used as a blowing agent, it may also be present in the polyol. If water is present, than preferably up to 7.0 pbw, based on 100 pbw polyol.

The specific composition of the polyurethane mixture employed will depend on processing requirements and properties required of the end product. The starting mixtures that have been chosen to illustrate the present invention comprise polyol blends having hydroxyl values in the range 320 - 420 mg KOH/g and containing organo-silicone surfactant, amine catalyst and water levels of 3.0 to 3.5 pbw, based on 100 pbw polyol. Crude diphenylmethane diisocyanate (Shell Caradate 30) was used at a level of 10% in excess of the calculated stoichiometric level required. The addition of extra polyisocyanate is made to allow for side reactions occurring during the polyurethane reaction and is common practice. The blowing agents, used in conjunction with the water in the mixture, were HCFC141-b and cyclopentane. Such mixtures are considered to be useful in the production of refrigerators and deep freezers.

The polyolefin layer as such is also no part of the invention. In the aforementioned "Encyclopedia of Chemical Technology", 3rd ed., Vol. 16 ("Olefin polymers") all relevant information on polyolefins in general, and polypropylene in particular may be found.

The following examples illustrate the nature of the invention. The invention is illustrated in the examples by the preferred embodiment, however, without restricting the scope of the invention thereto.

### 1. Adhesion of the interpolymer on polyolefin.

Latices were applied by brush on untreated polypropylene sheets (Shell grade JE6100) and the resulting films were dried at 80 °C for a period of 15 minutes. The adhesion of the coating on polypropylene was tested according to the ASTM method D 3359 i.e. a "cross-cut" was drawn with a Gitterschnitt knife (model 295) on the coating, a portion of pressure-adhesive tape was applied over the inscribed area and pulled rapidly at a forty-five degree angle. The X-cut area was inspected and the adhesion was rated in accordance with the following scale, in which 2A is considered insufficient:
- 5A: No peeling or removal
- 4A: Trace peeling or removal along incisions
- 3A: Jagged removal along incisions up to 1.6 mm on either side
- 2A: Jagged removal along most of incisions up to 3.2 mm on either side
- 1A: Removal from most of the X under the tape
- 0A: Removal beyond the area of the X

Several latices were prepared with decreasing solubility parameters of the monomer blends. Their monomer composition, average solubility parameter and adhesion rating are described in Table 1. Latices A to F are comparative examples, of which latex D corresponds to the Example 1 of US Patent A-4,288,499. Latex J has the same monomeric composition as Latex I, but a slightly lower amount of surfactant (1 % anionic instead of 1 %wt anionic and 2 %wt of nonionic as used in the other latices). The higher amount of (nonionic) surfactant in latex I results in a higher polarity of the latex, which explains the slightly worse adhesion level of this latex in comparison to that achieved with latex J.

### 2. Adhesion of polyurethane foam on coated polypropylene

### 2.1. Preparation of test samples

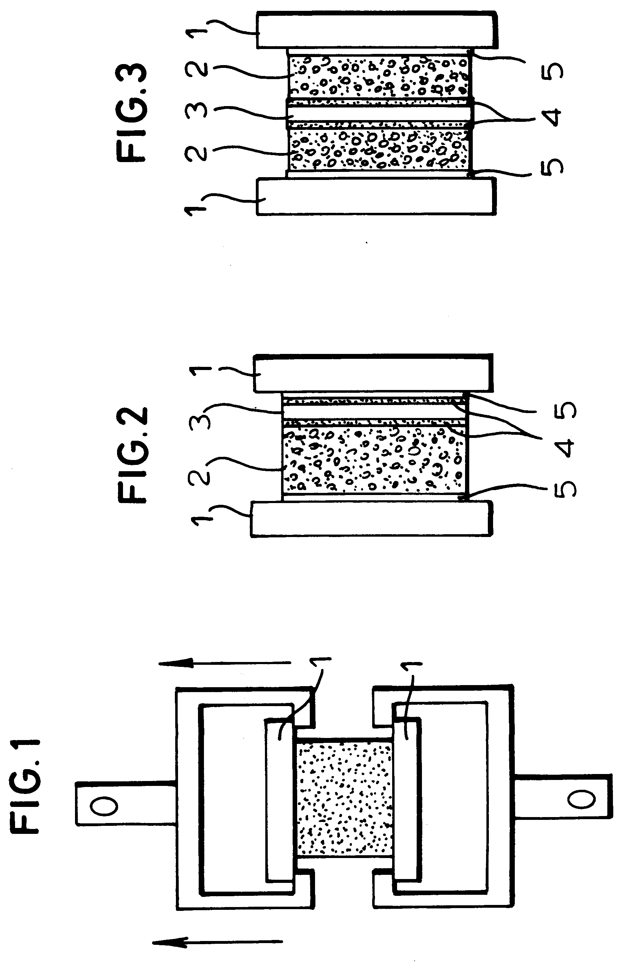

Latices D, H, K and L were chosen to be tested further. Untreated polypropylene sheets (3 mm thick, Shell grade JE6100) were coated both side with interpolymers as described above, and the coatings were dried for 15 minutes at 80 °C. A coated sheet was then placed in a mould of dimensions 600 x 600 x 50 mm, which was preheated to a temperature of 40 - 45 °C. A mixture of starting materials for polyurethane foam (in accordance with the preferred embodiment) was poured into the mould. The resulting polyurethane foam was kept in the mould for a curing period of approximately 10 minutes, being in direct contact with the coated sheet. The laminated panel thus produced had the composition: coating (4)/polypropylene sheet (3)/coating (4)/polyurethane foam (2) (single moulded specimen, see Figure 2). In Figure 2, (1) is a metal plate and (5) is a layer of epoxy adhesive.

Another technique for preparing test samples employed the single moulded specimen as prepared above. When the polyurethane foam was cured, the single moulded specimen was placed into another mould of the same length and width but having a cavity thickness of 100 mm. The single moulded specimen was placed in the mould in such a manner that a second mixture of the polyurethane starting materials could be poured into the mould and the resulting foam was formed in direct contact with the exposed face of the coated polypropylene sheet. The laminated panel produced in this manner had the composition:
polyurethane foam (2)/coating (4)/polypropylene sheet (3)/coating (4)/polyurethane foam (2) (double moulded specimen, see Figure 3). In Figure 3, (1) is a metal plate and (5) is a layer of epoxy adhesive.

The laminated panels were allowed to condition for a further period of at least 24 hours at room temperature before they were cut to provide suitable specimens for tensile adhesion testing according to ASTM D1623 Type C. Metal plates were fixed to opposing faces of the test specimens with a two component epoxy or polyurethane adhesive. The metal plates were required to fit in the jaws of an extensometer. An Instron 4502 was used to determine the tensile strength.

The grip assembly for testing for tensile adhesion properties is schematically shown in Figure 1. The arrows in that figure illustrate the direction of force, whereas (1) is a metal plate and the "black rectangular shaped box" represents the test specimen.

### 2.2 Results of the tensile strength

The results of the tensile measurements shown in Table 2, are the average of at least 10 specimens of single and/or double moulded specimens. Latices D, H, K and L have been tested as interpolymer coatings between the polypropylene sheet and the polyurethane foam. The blend for the preparation of the polyurethane foam has been kept constant, using Caracell-051 (a Shell trademark for cyclopentane) as blowing agent. Tests were carried out at 23 °C.

Note that, according to H.J.M. Grünbauer et all (Proceeding of polyurethanes world congress, 1991), a satisfactory tensile bond strength equals at least 110 kPa. Nonetheless, a tensile bond strength of 100 kPa (example 2, using latex H) is still adequate. Samples 3 and 4 out performed these values proving that latex L and especially latex K are particularly suitable to promote adhesion between polypropylene and in-situ blown polyurethane foam. Latex D (example 1 of US patent 4,288,499) performed very poorly.

Other tests were carried out under more severe conditions on samples prepared using latex K as adhesion promoter. Two different blowing agents were used : Caracell-051 (tm) and HCFC 141B (Solvay Fluor und Derivate GmbH). To mimic the conditions a moulding would encounter in the production and subsequent use of refrigerator linings, samples were tested at 23, -40 and 80 °C. The results are presented in Table 3. Rather than delamination at the interface of interpolymer coating and foam, nearly all samples failed due to failure of the foam. It may therefore be concluded that the adhesion provided by the interpolymer coating passed even the most severe testing.

**Table 1**

| **Adhesion of interpolymer films on polypropylene according to ASTM D 3359** | | | | |
|---|---|---|---|---|
| Latex code | Monomer composition % weight | | δ of monomer blend | Rating |
| A | MMA | 57 | | |
| | 2-EHA | 42 | 8.55 | 0A |
| | Ac.Ac. | 1 | | |
| B | MMA | 44.5 | | |
| | 2-EHA | 24.5 | 8.34 | 0A |
| | VV10 | 30 | | |
| | Ac.Ac. | 1 | | |
| C | MMA | 40.5 | | |
| | 2-EHA | 18.5 | 8.28 | 0A |
| | VV10 | 40 | | |
| | Ac.Ac. | 1 | | |
| D | CHMA | 70 | 8.28 | 0A |
| | BA | 30 | | |
| E | MMA | 36 | | |
| | 2-EHA | 13 | 8.21 | 0A |
| | VV10 | 50 | | |
| | Ac.Ac. | 1 | | |
| F | MMA | 10 | | |
| | 2-EHA | 40 | 8.15 | 0A |
| | VV5 | 49 | | |
| | Ac.Ac. | 1 | | |
| G | MMA | 20 | | |
| | VV10 | 79 | 8.07 | 3A |
| | Ac.Ac. | 1 | | |
| H | MMA | 15 | | |
| | VV11 | 84 | 8.02 | 5A |
| | Ac.Ac. | 1 | | |
| I | MMA | 15 | | |
| | VV10 | 84 | 8.02 | 4A |
| | Ac.Ac. | 1 | | |
| J | MMA | 15 | | |
| | VV10 | 84 | 8.02 | 5A |
| | Ac.Ac. | 1 | | |
| K | MMA | 10 | | |
| | VV10 | 89 | 7.97 | 5A |
| | Ac.Ac. | 1 | | |
| L | V.Ac. | 10 | | |
| | VV10 | 89 | 7.95 | 4A |
| | Ac.Ac. | 1 | | |
| M | VV10 | 99 | 7.87 | 5A |
| | Ac.Ac. | 1 | | |
| (for abbreviations, see hereinafter) | | | | |

The abbreviations used in Table 1 are as follows:
- Ac.Ac.:: Acrylic acid
- BA:: Butyl acrylate
- CHMA:: Cyclohexyl methacrylate
- δ:: Solubility parameter of monomer blends calculated according to Small
- 2-EHA:: 2-ethylhexyl acrylate
- VV5:: VeoVa 5, a Shell trademark for vinyl ester of pivalic acid
- VV10:: VeoVa 10, a Shell trademark for vinyl ester of Versatic acid containing 10 carbon atoms
- VV11:: VeoVa 11, a Shell trademark for vinyl ester of Versatic acid containing 11 carbon atoms (Versatic is also a Shell trademark).

**Table 2**

| **Tensile test of samples at 23 °C** | | | |
|---|---|---|---|
| Example No. | Latex ref. | Average strength (kPa) | Location of failure at maximum force C or F* |
| 1 | D | 41 | C |
| 2 | H | 100 | C |
| 3 | K | 215 | all (except 1 sample) F |
| 4 | L | 129 | all (except 1 sample) C |

**Table 3**

| **Tensile tests of samples prepared with latex K based coating.** | | | | |
|---|---|---|---|---|
| Example No. | Blowing agent# | Test temp. (°C) | Average strength (kPa) | Location of failure at maximum force C or F* |
| 3 | C-051 | 23 | 215 | all (except 1 sample) F |
| 5 | C-051 | -40 | 219 | all (except 1 sample) F |
| 6 | C-051 | 80 | 140 | half C, half F |
| 7 | HCFC 141B | 23 | 145 | F |
| 8 | HCFC 141B | -40 | 153 | F |
| 9 | HCFC 141B | 80 | 134 | F |

| | | | | |
|---|---|---|---|---|
| # C-051 stands for Caracell-051, a Shell trademark | | | | |
| * C indicates failure at interpolymer coating/polypropylene sheet interface. F indicates failure in foam (thus, exellent adhesion). | | | | |

## Claims

1. A process for preparing laminates of at least one layer of a polyolefin and at least one layer of polyurethane and/or polyisocyanurate, comprising applying an interpolymer coating on at least one side of said layer of the polyolefin, and preparing said layer of the polyurethane and/or polyisocyanurate on top of said interpolymer coating, wherein the interpolymer coating is composed of an interpolymer prepared by bulk, solution, suspension or emulsion polymerisation of a monomer mixture that has an average solubility parameter δ of less than 8.1 (cal/cm³)^{½}, measured according to Small, Polymers Handbook 2nd ed. Section IV, part 15, p. IV-337 to 359).

2. A process as claimed in claim 1, wherein the polyolefin is polypropylene.

3. A process as claimed in claim 1 or 2, wherein the polyurethane and/or polyisocyanurate is prepared in presence of a blowing agent.

4. A process as claimed in claim 1, wherein the interpolymer has been prepared from a monomer mixture having an average solubility parameter δ of less than 8.05 (cal/cm³)^{½}.

5. A process as claimed in any one of claims 1 to 4, wherein the polyurethane is prepared by polymerising in the presence of a suitable catalyst a starting mixture comprising:
1) a polyol composition having a hydroxyl value in the range 200 - 700 mg KOH/g,
2) one or more polyisocyanates, preferably selected from toluene diisocyanate and/or diphenylmethane diisocyanate, and
3) one or more blowing agents.

6. A process as claimed in claims 3-5, wherein the blowing agent is cyclopentane or a mixture comprising cyclopentane.

7. A process as claimed in claims 3-5, wherein the blowing agent is water or a mixture of water with one or more physical blowing agents such as claimed in claim 6.

8. A process as claimed in any one of claims 1 to 7, wherein the monomer mixture comprises:-
1) at least 60 %wt of one or more vinyl esters of tertiary, saturated carboxylic acids containing 5 to 20 carbon atoms in the acid moiety, the remaining less than 40 %wt being composed of at least
2) one or more alkyl esters of a polymerisable alpha, beta-unsaturated carboxylic acid containing up to 12 carbon atoms in the alkyl moiety, and/or
3) one or more vinyl esters of saturated aliphatic monocarboxylic acids containing up to 8 carbon atoms in the acid moiety, and/or
4) up to 3 %wt of one or more stabilising monomers selected from the group comprising (meth)acrylic acid, (meth)acrylamide, a C₁-C₃ hydroxyalkyl (meth)acrylate and sodium vinyl sulphonate.

9. A process as claimed in claim 8, wherein the interpolymer is prepared by emulsion polymerisation of a monomer mixture comprising:
1) at least 80 wt% of one or more vinyl esters of tertiary, saturated carboxylic acids containing from 5 to 13 carbon atoms in the acid moiety, the remaining less than 20 wt% being composed of at least
2) one or more alkyl esters of a polymerisable alpha,beta unsaturated carboxylic acid, containing up to 12 carbon atoms in the alkyl moiety, and/or
3) one or more vinyl esters of saturated aliphatic monocarboxylic acids containing up to 8 carbon atoms in the acid moiety and/or
4) up to 1 wt% of one or more stabilizing monomers selected from the group comprising methacrylic acid, (meth)acrylamide, a C₁-C₃ hydroxyalkyl-(meth)acrylate and sodium vinyl sulphonate,
and the interpolymer coating is prepared by applying the latex containing the interpolymer.

## Patentansprüche

1. Verfahren zur Herstellung von Laminaten aus wenigstens einer Schicht eines Polyolefins und Wenigstens einer Schicht aus Polyurethan und/oder Polyisocyanurat, umfassend das Aufbringen eines Interpolymerüberzugs auf wenigstens eine Seite dieser Polyolefinschicht und das Ausbilden dieser Schicht aus Polyurethan und/oder Polyisocyanurat auf diesem Interpolymerüberzug, worin der Interpolymerüberzug aus einem Interpolymer besteht, das durch Massen-, Lösungs- oder Emulsionspolymerisation eines Monomerengemisches hergestellt wird, welches einen mittleren Löslichkeitsparameter δ von weniger als 8,1 (cal/cm³)^{1/2}. gemessen nach Small, Polymers Handbook, 2. Aufl., Abschnitt IV, Teil 15, S. IV-337 bis 359, aufweist.

2. Verfahren nach Anspruch 1, worin das Polyolefin Polypropylen ist.

3. Verfahren nach Anspruch 1 oder 2, worin das Polyurethan und/oder Polyisocyanurat in Anwesenheit eines Treibmittels hergestellt wird.

4. Verfahren nach Anspruch 1, worin das Interpolymer aus einem Monomerengemisch mit einem mittleren Löslichkeitsparameter δ von Weniger als 8,05 (cal/cm³)^{1/2} hergestellt wurde.

5. Verfahren nach einem der Ansprüche 1 bis 4, worin das Polyurethan durch Polymerisieren eines Ausgangsgemisches in Gegenwart eines geeigneten Katalysators hergestellt wird, welches umfaßt:
1) eine Polyolzusammensetzung mit einem Hydroxylwert im Bereich von 200 - 700 mg KOH/g,
2) ein oder mehrere Polyisocyanate, vorzugsweise ausgewählt unter Toluoldiisocyanat und/oder Diphenylmethandiisocyanat, und
3) ein oder mehrere Treibmittel.

6. Verfahren nach den Ansprüchen 3-5, worin das Treibmittel Cyclopentan oder ein Cyclopentan umfassendes Gemisch ist.

7. Verfahren nach den Ansprüchen 3-5, worin das Treibmittel Wasser oder ein Gemisch aus Wasser mit einem oder mit mehreren physikalischen Treibmitteln, wie in Anspruch 6 beansprucht, ist.

8. Verfahren nach einem der Ansprüche 1 bis 7, worin das Monomerengemisch umfaßt:
1) wenigstens 60 Gew.-% eines oder mehrerer Vinylester von tertiären, gesättigten Carbonsäuren mit einem Gehalt an 5 bis 20 Kohlenstoffatomen im Säurerest, wobei die restlichen 40 Gew.-% aus wenigstens
2) einem oder mehreren Alkylester(n) einer polymerisierbaren alpha-, beta-ungesättigten Carbonsäure mit einem Gehalt an bis zu 12 Kohlenstoffatomen im Alkylrest und/oder
3) einem oder mehreren Vinylester(n) aus gesättigten aliphatischen Monocarbonsäuren mit einem Gehalt an bis zu 8 Kohlenstoffatomen im Säurerest und/oder
4) bis zu 3 Gew.-% eines oder mehrerer stabilisierender Monomere, ausgewählt aus der (Meth)acrylsäure, (Meth)acrylamid, ein C₁-C₃-Hydroxyalkyl(meth)acrylat und Natriumvinylsulfonat umfassenden Gruppe, zusammengesetzt sind.

9. Verfahren nach Anspruch 8, worin das Interpolymer durch Emulsionspolymerisation eines Monomerengemisches hergestellt wird, welches umfaßt:
1) wenigstens 80 Gew.-% eines oder mehrerer Vinylester von tertiären, gesättigten Carbonsäuren mit einem Gehalt an 5 bis 13 Kohlenstoffatomen im Säurerest, wobei die restlichen 20 Gew.-% aus wenigstens
2) einem oder mehreren Alkylester(n) einer polymerisierbaren alpha,beta-ungesättigten Carbonsäure mit einem Gehalt an bis zu 12 Kohlenstoffatomen im Alkylrest und/oder
3) einem oder mehreren Vinylester(n) von gesättigten aliphatischen Monocarbonsäuren mit einem Gehalt an bis zu 8 Kohlenstoffatomen im Säurerest und/oder
4) bis zu 1 Gew.-% eines oder mehrerer stabilisierender Monomere, ausgewählt aus der (Meth)acrylsäure, (Meth)acrylamid, ein C1-C3-Hydroxyalkyl(meth)acrylat und Natriumvinylsulfonat umfassenden Gruppe, zusammengesetzt sind
und der Interpolymerüberzug durch Auftragen des das Interpolymer enthaltender Latex hergestellt wird.

## Revendications

1. Procédé de préparation de stratifiés d'au moins une couche d'une polyoléfine et d'au moins une couche de polyuréthanne et/ou de polyisocyanurate, comprenant l'application d'un revêtement d'interpolymère sur au moins une face de ladite couche de polyoléfine, et la préparation de ladite couche de polyuréthanne et/ou de polyisocyanurate au-dessus dudit revêtement d'interpolymère, dans lequel le revêtement d'interpolymère est composé d'un interpolymère préparé par une polymérisation en masse, solution, suspension ou émulsion d'un mélange de monomères qui a un paramètre de solubilité moyenne δ inférieur à 8,1 (cal/cm³)^{1/2}, mesuré suivant Small, Polymers Handbook seconde édition, chapitre IV, paragraphe 15, p. IV-337 à 359.

2. Procédé suivant la revendication 1, dans lequel la polyoléfine est du polypropylène.

3. Procédé suivant l'une ou l'autre des revendications 1 et 2, dans lequel le polyuréthanne et/ou polyisocyanurate est préparé en présence d'un agent de soufflage.

4. Procédé suivant la revendication 1, dans lequel l'interpolymère a été préparé à partir d'un mélange de monomères ayant un paramètre de solubilité moyenne δ inférieur à 8,05 (cal/cm³)^{1/2}.

5. Procédé suivant l'une quelconque des revendications 1 à 4, dans lequel le polyuréthanne est préparé en polymérisant en présence d'un catalyseur approprié un mélange de départ comprenant :
1) une composition de polyol ayant un indice d'hydroxyle dans la gamme de 200-700 mg de KOH/g,
2) un ou plusieurs polyisocyanates, avantageusement choisis parmi le toluène diisocyanate et/ou le diphénylméthane diisocyanate, et
3) un ou plusieurs agents de soufflage.

6. Procédé suivant l'une quelconque des revendications 3 à 5, dans lequel l'agent de soufflage est le cyclopentane ou un mélange comprenant du cyclopentane.

7. Procédé suivant l'une quelconque des revendications 3 à 5, dans lequel l'agent de soufflage est l'eau ou un mélange d'eau avec un ou plusieurs agents de soufflage physiques tels que revendiqués à la revendication 6.

8. Procédé suivant l'une quelconque des revendications 1 à 7, dans lequel le mélange de monomères comprend :
1) au moins 60 % en poids d'un ou plusieurs esters vinyliques d'acides carboxyliques saturés, tertiaires contenant 5 à 20 atomes de carbone dans le fragment d'acide, le restant, inférieur à 40 % en poids, étant composé d'au moins :
2) un ou plusieurs esters alkyliques d'un acide carboxylique alpha, bêta-insaturé polymérisable contenant jusqu'à 12 atomes de carbone dans le fragment alkyle, et/ou
3) un ou plusieurs esters vinyliques d'acides monocarboxyliques aliphatiques saturés contenant jusqu'à 8 atomes de carbone dans le fragment d'acide, et/ou
4) jusqu'à 3 % en poids d'un ou plusieurs monomères stabilisants choisis dans le groupe comprenant l'acide (méth)acrylique, le (méth)acrylamide, un (méth)acrylate d'hydroxyalkyle en C₁-C₃ et le vinylsulfonate de sodium.

9. Procédé suivant la revendication 8, dans lequel l'interpolymère est préparé par une polymérisation en émulsion d'un mélange de monomères comprenant :
1) au moins 80 % en poids d'un ou plusieurs esters vinyliques d'acides carboxyliques saturés, tertiaires contenant 5 à 13 atomes de carbone dans le fragment d'acide, le restant inférieur à 20 % en poids étant composé d'au moins :
2) un ou plusieurs esters alkyliques d'un acide carboxylique alpha, béta-insaturé polymérisable, contenant jusqu'à 12 atomes de carbone dans le fragment alkyle, et/ou
3) un ou plusieurs esters vinyliques d'acides monocarboxyliques aliphatiques saturés contenant jusqu'à 8 atomes de carbone dans le fragment d'acide, et/ou
4) jusqu'à 1 % en poids d'un ou plusieurs monomères stabilisants choisis dans le groupe comprenant l'acide (méth)acrylique, le (méth)acrylamide, un (méth)acrylate d'hydroxyalkyle en C₁-C₃ et le vinylsulfonate de sodium,
et le revêtement d'interpolymère est préparé par application du latex contenant l'interpolymère.
